# EUROPEAN PATENT SPECIFICATION

(11) **EP 0 354 937 B1**
(45) Date of publication and mention of the grant of the patent: **22.06.1994**
(21) Application number: 88909859.6
(22) Date of filing: 01.11.1988
(51) Int. Cl.: B01D 61/00, B01D 53/22, C08L 1/08, C08L 33/12

(54) **COMPOSITE MEMBRANES OF POLY(METHYL METHACRYLATE) BLENDS**
ZUSAMMENGESETZTE MEMBRANEN AUS POLYMETHYLMETHACRYLATGEMISCHEN
MEMBRANES COMPOSITES DE MELANGES DE POLY(METHYL METHACRYLATE)

(30) Priority: 05.11.1987 US 117639
(43) Date of publication of application: 21.02.1990
(73) Proprietor: PRAXAIR TECHNOLOGY, INC., Danbury, CT 06810-5113 (US)
(72) Inventor: NELSON, Joyce, K., Lexington, MA 02173 (US)
(74) Representative: Schwan, Gerhard, Dipl.-Ing.
(86) International application number: PCT/US88/03804
(87) International publication number: WO 89/04201

(56) References cited:
- EP-A- 0 066 408
- EP-A- 0 175 668
- EP-A- 0 215 549
- US-A- 3 767 737
- US-A- 4 214 020
- US-A- 4 243 701
- US-A- 4 746 473
- Chemical Abstracts, vol. 90, no. 20, 14 May 1979, (Columbus, Ohio,US) B.J. Narola et al.: "Cellulose acetate (CA)-poly (methylmethacrylate((PMMA) semipermeable membrane; Part I: Development of CA PMMA blend flat semi-permeable membrane" see page 36, abstract no. 153132c & Indian Chem. J. 1978, 13(6)-29-31
- Chemical Abstracts, vol. 91, no. 6, 6 August 1979, (Columbus, Ohio, US) B.J. Narola et al.: "Cellulose acetate (CA)-poly (methylmethacrylate)(PMMA) blend semipermeable membrane. Part IV. Application of CA-PMMA blend flat membrane for other than brackish water desalination" see page 47, abstract no. 40544r& Indian Chem. J. 1979, 13 (11), 23-4.

## Description

### BACKGROUND OF THE INVENTION

### 1. Field of the Invention

This invention pertains to the field of semi-permeable membranes for separating at least one component of a gaseous mixture. More specifically, the present invention relates to composite membranes having a separation layer comprised of a mixture of poly(methyl methacrylate) or a copolymer thereof and at least one cellulosic derivative resulting in the composite membrane having enhanced separation and permeating characteristics.

### 2. Discussion of Related Art

Permeable membranes capable of separating at least one selected component from a fluid mixture, either gas or liquid, are considered in the art as a convenient, potentially highly advantageous means for achieving desirable fluid separation and/or concentration.

To achieve a selective separation, the membrane must exhibit less resistance to the transport of one or more components than that of at least one other component of the mixture. Thus, selective separation can provide preferential depletion or concentration of one or more desired components in the mixture with respect to at least one other component and therefore provide a product having a different proportion of the one or more desired components to the at least one other component than that proportion in the mixture.

However, in order for selective separation of one or more desired components by the use of separation membranes to be commercially attractive, the membranes must not only be capable of withstanding the conditions to which they may be subjected during the separation operation, but also must provide an adequately selective separation of the one or more desired components and a sufficiently high flux, i.e., permeation rate of the permeate per unit surface area, so that the use of the separation procedure is carried out on an economically attractive basis. Separation membranes which exhibit adequately high selective separation, but undesirably low fluxes, may require such large separating membrane surface area that the use of these membranes is not economically feasible. Similarly, separation membranes which exhibit a high flux, but low selective separation, may also be commercially unattractive.

Accordingly, work continues to develop separation membranes which can provide both an adequately selective separation of the one or more desired components and a sufficiently high flux such that the use of these separation membranes on a commercial basis is economically feasible.

Membranes are generally utilized for the separation of fluid mixtures in which the feed and the resulting raffinate and permeate do not undergo a phase change during the permeation process.

Membranes have been fabricated in various shapes, such as (1) flat sheets which may be supported in a typical plate and frame structure similar to a filter dress; (2) flat sheets rolled into spirals with spacing materials interleaved with the membrane and the assembly sealed to provide spiroidal channels permitting the passage of the feed on one side of the coiled membrane to the opposite side of the membrane; (3) as tubes lining the inner surface of a reinforced braid, the braid itself at times being a component in a larger tube; (4) in the form of open-ended hollow fibers so organized and sealed into header plates as to provide a separation of the flows over the external surfaces of the hollow fibers from any flow within the bores of the hollow fibers ensuing by virtue of passage of permeate across the membrane.

Various types of permeable membranes have been proposed in the art for carrying out a variety of fluid separation operations. Such membranes can generally be classified as being of the (1) isotropic, (2) asymmetric, or (3) composite type. The so-called isotropic and asymmetric type membranes are comprised essentially of a single permeable membrane material capable of selectively separating desired components of a fluid mixture. Isotropic membranes have the same density throughout the thickness thereof. Such membranes generally have the disadvantage of low permeability, i.e., low permeate flux, due to the relatively high membrane thickness necessarily associated therewith. Asymmetric membranes are distinguished by the existence of two distinct morphological regions within the membrane structure. One region comprises a thin, dense semipermeable skin capable of selectively permeating one component of a fluid mixture. The other region comprises a less dense, porous, non-selective support region that serves to preclude the collapse of the thin skin region of the membrane under pressure.

Composite membranes generally comprise a thin layer or coating of a suitable permeable membrane material superimposed on a porous substrate. The separation layer, which determines the separation characteristics of the composite structure, is advantageously very thin so as to provide the desirably high permeability referred to above. The substrate only serves to provide a support for the thin membrane layer positioned thereon and has substantially no separation characteristics with respect to the fluid mixture being separated or concentrated.

Membranes entirely composed of blends of cellulose acetate and poly(methyl methacrylate) and to used for desalination by reverse osmosis are known from Chemical Abstracts, vol. 90, no. 20, 14 May 1979, (Columbus, Ohio, US), B.J. Narola et al.; page 36 abstract no. 153132c, and from Chemical Abstracts, vol. 91, no. 6, 6 August 1979, (Columbus, Ohio, US), B.J. Narola et al.; page 47, abstract no. 40544r.

EP-A-0 066 408 describes a porous membrane likewise entirely composed of blends of cellulose acetate and acrylic polymer, such as poly(methyl methacrylate) or methyl acrylate-methyl metacrylate, or of cellulose acetate, acrylic polymer and cellulose nitrate. This known membrane may be in the form of sheet, tube or hollow fiber and has a thickness from 1 to 100 »m, preferably 5 to 50 »m, and it is intended to be used for the separation of liquids particularly in the fields of plasmapheresis, hemodialysis and hemofiltration.

Furthermore a process for coating bundles of hollow fiber membranes particularly suited for gas separations is known from US-A-4 214 020, wherein the membranes comprise a porous support which does not unduly hinder the flow of the fluid to be separated, and a coating on the gaseous support, which coating provides the desired selective separation. The depositable coating materials may be natural or synthetic substances which are organic or inorganic or mixtures thereof. A huge variety of suitable materials is indicated, amongst them poly(alcyl methacrylates) and cellulosic polymers. The thickness of the coating is less than about 0.2 »m.

The problems associated with the preparation of composite membranes are many. Most significantly, however, is the challenge of finding a material for use as the separation layer for a given application, which material not only displays high permeability and high selectivity, but additionally possesses the necessary thermomechanical properties which makes it a good film former to consistently form a continuous thin film without defects or pinholes and be flexible enough for use in a composite membrane.

Accordingly, a need still exists for finding new materials suitable for use as separation layers in a composite membrane having high selectivity without sacrifice in permeation rate, while at the same time having the necessary thermomechanical characteristics necessary for making a thin, continuous film.

### SUMMARY OF THE INVENTION

The subject invention, in conformity with one aspect thereof comprises a composite membrane capable of selectively permeating at least one more readily permeable component of a gaseous mixture comprising:
(a) a porous support layer having substantially no separation characteristics with respect to said gaseous mixture; and
(b) a separation layer positioned on the support layer comprised of a mixture of poly(methyl methacrylate) or a copolymer thereof containing at least 50 % by weight of poly(methyl methacrylate) and at least one cellulosic derivative, wherein the ratio by weight of the poly(methyl methacrylate) or copolymer thereof to the cellulose derivative is from about 10:90 to about 90:10, said separation layer having a thickness of less than about 0.4 »m and substantially determining the separation characteristics of the composite membrane.

The present invention according to another aspect thereof, comprises a process for the preparation of a composite membrane capable of selectively permeating at least one more readily permeable component of a gaseous mixture comprising:
(a) providing a support layer;
(b) providing a solution containing a mixture of poly(methyl methacrylate) or a copolymer thereof containing at least 50 % by weight of poly(methyl methacrylate), at least one cellulosic derivative and a solvent therefore, which solvent is a non-solvent for the support layer, wherein the ratio by weight of the poly(methyl methacrylate) or copolymer thereof to the cellulose derivative is from about 10:90 to about 90:10;
(c) coating the support layer with the solution to provide on the support layer a separation layer having a thickness of less than about 0.4 »m;
(d) drying said separation layer on the support layer to form the composite membrane, wherein the separation layer determines the separation characteristics of the membrane and the support layer has substantially no separation characteristics with respect to said gaseous mixture.

The invention, in conformity with a still further aspect thereof, also comprises a method for separating a gas in a gaseous mixture from at least one other gas in said gaseous mixture by selective permeation and providing a permeated product containing at least one permeating gas, comprising: contacting the gaseous mixture with one surface of a composite membrane, which composite membrane, with respect to at least one pair of gases of said gaseous mixture, exhibits selective permeation of one gas of said pair of gases over that of the remaining gas of said pair of gases, and which composite membrane comprises a porous support layer having substantially no separation characteristics with respect to said gas mixture and a separation layer positioned on the support layer comprised of a mixture of poly(methyl methacrylate) or copolymer thereof containing at least 50 % by weight of poly(methyl methacrylate) and at least one cellulosic derivative, wherein the ratio by weight of the poly(methyl methacrylate) or copolymer thereof to the cellulose derivative is from about 10:90 to about 90:10, said separation layer having a thickness of less thant about 0.4 »m and substantially determining the separation characteristics of the composite membrane; permeating said at least one permeating gas into and through the composite membrane; and removing from the vicinity of the opposite surface of the composite membrane a permeated product having a different proportion of said at least one gas of said gaseous mixture to said at least one other gas of said gaseous mixture than the proportion in the gaseous mixture of said at least one gas to said at least one other gas.

It was discovered that the combination of materials used in the afore-mentioned composite membrane, in the process for the preparation of such a membrane and in the separating method using such a membrane provides enhanced separation and permeating characteristics.

More particularly, it has discovered that a blend of poly(methyl methacrylate) or a copolymer thereof that contains at least 50 % by weight of poly(methyl methacrylate) and at least one cellulosic derivative, wherein the ratio by weight of the poly(methyl methacrylate) or copolymer thereof to the cellulose derivative is from about 10:90 to about 90:10, will provide a membrane forming material with an advantageous combination of separation and permeation characteristics and superior film-forming properties. When this blend is utilized as a coating material in conjunction with a support layer, a composite membrane is provided having high permeation rates in addition to excellent separation factors. This composite membrane may be used for selectively permeating at least one or more readily permeable components of a gaseous, mixture in gas separation operations.

Polymers are typically not miscible with one another generally resulting in the formation of non-uniform films when cast as a mixture, having separate regions of each polymer, respectively. Applicant, however, has discovered that poly(methyl methacrylate) or a copolymer thereof and at least one cellulosic derivative, particularly cellulose acetate, actually complement one another to provide a blend having excellent thermomechanical properties. This novel blend has excellent film forming characteristics capable of forming a substantially uniform, thin, continuous film layer in conjunction with high selectivity and high flux. As used herein a "copolymer" of poly(methyl methacrylate) is understood to mean a copolymer containing at least 50% by weight of poly(methyl methacrylate).

More specifically in regard to how the components of this unique blend complement one another, it is noted that poly(methyl methacrylate), when used as a coating layer by itself, has extremely high separation factors, but very low permeabilities. In addition, poly(methyl methacrylate) by itself exhibits brittleness which is not conducive for forming a thin, defect free film. Moreover, very thin and uniform, continuous films of poly(methyl methacrylate) cannot be consistently produced resulting in a film having small imperfections and/or pinholes leading to undesirable separation factors. In conjunction with the low permeability of the poly(methyl methacrylate), such defects also significantly decrease the separation factor of the membrane. On the other hand, cellulose derivatives, particularly cellulose acetate, possess generally good separation factors and high permeation rates.

Quite surprisingly, the blend of poly(methyl methacrylate) or a copolymer thereof which contains at least 50% by weight of poly(methyl methacrylate) and the at least one cellulosic derivative produces a material which has unexpectedly high separation characteristics as well as high permeation rates thereby uniquely complementing each other. Thus, the blend retains the high separation characteristics of the poly(methyl methacrylate) as well as the high permeation characteristics of the cellulose derivative, whereas it would have been thought that these respective properties would have been compromised due to the blending of these materials resulting in separation and permeation characteristics which are, at best, no better than the average value of these materials. Instead, the blend surprisingly retains the desirable characteristics of both the poly(methyl methacrate) and the cellulosic derivative.

In the separation of hydrogen from nitrogen, for example, the separation factor of the material comprised of the blend of poly(methyl methacrylate) and cellulose acetate can be as high as twice that of a cellulose acetate composite membrane. Similarly, the permeation rate of the said blend of the present invention can be twice as high as that of a poly(methyl methacrylate) composite membrane.

As still a further added benefit, the blend of poly(methyl methacrylate) or copolymer thereof and the at least one cellulosic derivative also enables the consistent production of reproducible, uniform, continuous thin films having substantially no defects of the type associated with poly(methyl methacrylate) alone.

It is noted that in his Ph.D. Thesis, University of Texas, Austin, Texas, May, 1985, J. S. Chiou discussed the gas separation characteristics of dense flat sheets of poly(methyl methacrylate). As discussed above, these poly(methyl methacrylate) membranes were reported to have extraordinarily high gas separation factors but exhibited correspondingly low permeability coefficients thereby making poly(methyl methacrylate) unattractive for commercial use. Blends of poly(methyl methacrylate) with styrene acrylonitrile were also prepared.

So too, polymeric blends have also been discussed in the prior art. Blends of cellulose triacetate and cellulose diacetate are disclosed for liquid separation in "Reverse Osmosis Membrane Research" by W. N. King, et al., Plenum Press, New York, 1972, page 131. These polymeric blend membranes were used for single-pass desalination of water. In a report prepared for the Office of Water Research and Technology (Funding Agreement No. 14-34-0001-6523, 1977), I. Cabasso and C. N. Tran disclose blends of cellulose acetate with phosphonylated and brominated polyphenylene oxide as useful materials for water desalination.

However, the unexpected results obtained by the present invention as to the substantial compatability and the complementing manner in which the poly(methyl methacrylate) or copolymer thereof and cellulosic derivatives enhance each other's properties are not taught or suggested within the prior art noted above.

### DETAILED DESCRIPTION OF THE INVENTION

The new membrane forming materials of the present invention, which may be used as a separation layer coating in conjunction with a porous support layer to form a new and enhanced composite membrane capable of selectively permeating at least one or more readily permeable components of a gaseous mixture in gas separation operations, comprises a mixture of poly(methyl methacrylate) or a copolymer thereof and at least one cellulosic derivative.

Poly(methyl methacrylate) is a well known component and can readily be commercially obtained or synthesized by one skilled in the art. Poly(methyl methacrylate) can be prepared to vary in tacticity, namely, as syndiotactic, atactic, or isotactic, and all are within the purview of the present invention, although the atactic form is more readily available and therefore economically desirable.

A discussion of the various forms of poly(methyl methacrylate) is found in "Low-frequency Thermomechanical Spectrometry Of Polymeric Materials: Tactic Poly(Methyl Methacrylates)" by J. K. Gillham, et al., Journal Of Applied Polymer Science, Volume 21, 401-424 (1977).

A copolymer of poly(methyl methacrylate) may also be used in the present invention. Suitable materials for co-polymerization with poly(methyl methacrylate) are those which do not substantially reduce the separation characteristics of poly(methyl methacrylate). Generally, applicable materials for co-polymerization with methyl methacrylate are those which form a co-polymer having a glass transition temperature which is no less than about 20% of the glass transition temperature of poly(methyl methacrylate) alone. If the glass transition temperature of the copolymer is substantially less than the glass transition temperature of poly(methyl methacrylate), then the copolymer will generally have separation properties which are relatively less than that of the poly(methyl methacrylate) alone.

Applicable copolymers include poly(methyl methacrylate-acrylonitrile), discussed in J. Hiemeleers, Chem., 47, 7, 1961; poly(methyl methacrylate-vinyl chloride) discussed in Y. Minoura, Chemical Abstracts, 68, 1749, 1965 and 64, 11337, 1966; poly(methyl methacrylate-methacrylonitrile), poly(methyl methacrylate-vinyl acetate), and poly(methyl methacrylate-methyl-alpha chloroacrylate), all discussed in U.S. Patent Nos. 3,069,380 and 3,069,381; poly(methyl methacrylate-acrylonitrile) discussed in British Patent No. 805,921; poly(methyl methacrylate-pentafluorophenyl methacrylate); and poly(methyl methacrylate-styrene). In addition, suitable materials that may be copolymerized with the methyl methacrylate are ethyl methacrylate, n-butyl methacrylate, iso-butyl methacrylate, and the like.

Preferably, the amount of poly(methyl methacrylate) in the copolymer is at least about 50% by weight and more preferably is at least about 80% by weight.

The cellulosic derivatives applicable in the present invention comprise cellulose acetate, cellulose acetate butyrate, cellulose propionate, cellulose acetate propionate, cellulose butyrate, and the like. All of these cellulose derivatives are well known in the art and can be readily obtained commercially or synthesized by one skilled in the art.

In a preferred embodiment, cellulose acetate is employed in conjunction with the poly(methyl methacrylate). Preferably, the cellulose acetate has a degree of acetylation of greater than 2.0, and more preferably 2.0 to 2.9, where the degree of acetylation varies between 0 for unsubstituted cellulose to 3 for the completely substituted material.

Generally, cellulose acetate is prepared from cellulose by acetylation with acetic anhydride, acetic acid and a catalyst, such as sulfuric acid. During acetylation, which is accompanied by some hydrolysis, the desirable degree of polymerization range (for membranes) of between 100 and 200 is attained as a result of acid catalyzed depolymerization of the cellulose backbone. The other cellulose derivatives are prepared in a substantially similar manner using the corresponding acids and anhydrides.

In order to prepare the coating blend, the poly(methyl methacrylate) or copolymer thereof and at least one of the cellulosic derivatives must be dissolved in one or more solvents so as to form a solution. From this solution, utilizing conventional preparation techniques, dense fibers, asymmetric membranes, composite membranes, and the like, may be prepared. Thus, as will be discussed more fully hereinbelow, it is by means of this solution that a coating is applied to a porous substrate (which acts as a support layer in the composite membrane) and forms a separation layer. This is generally performed by passing or immersing the porous substrate surface through the solution.

Any suitable solvent or mixture of solvents for the blend of poly(methyl methacrylate) or copolymer thereof and the at least one cellulosic derivative can be used and those skilled in the art will appreciate and know to select the preferred solvents that are suitable for this blend of materials. Generally, the solvent is one which will dissolve the poly(methyl methacrylate) or copolymer thereof and the cellulosic derivative materials and can be inorganic or organic and able to produce a homogeneous or uniform solution. The solvent used to prepare the solution may also be a mixture of one or more solvents that will dissolve the poly(methyl methacrylate) or copolymer thereof and cellulose derivative materials and one or more non-solvents for these materials which are used as additives to the solution. Such solvent mixtures are generally preferred. The important consideration, whether a single solvent or a mixture of solvent and non-solvent is used, is that the solution is preferably essentially homogeneous and uniform.

When the solution of poly(methyl methacrylate) and cellulose derivative is intended for use in the preparation of a composite membrane, the solution should be of a low enough viscosity that it will be easily applied as an even coating on the porous substrate and preferably wets the porous substrate. The viscosity at application temperature can vary from less than abut 50 centipoise and is generally from about 0.05 to about 10 to 20 centipoise.

The concentration of film-forming material in the solution can vary from about 0.25 to about 5% by weight of the solution.

Illustrative of the solvents that can be used to prepared the solution are as follows: selective aromatic hydrocarbons, e.g., toluene, xylene, etc.; ketones, e.g., acetone, dimethyl ketone, diethyl ketone, methyl ethyl ketone, etc.; acids, e.g., acetic acid, propionic acid, etc.; esters, e.g. ethyl acetate, etc.; some halogenated or nitrated organic solvents, e.g. nitromethane; and mixtures thereof may also be used.

Preferably, the solvents for the poly(methyl methacrylate) and cellulosic derivatives include nitromethane alone or in combination with a C₁-C₄ aliphatic alcohol; acetone alone or in combination with a C₁-C₄ aliphatic alcohol, and most preferably, is a mixture of acetic acid with C₁-C₄ aliphatic alcohols, most preferably isopropanol, or a mixture of acetic acid with C₁-C₄ aliphatic alcohols and water.

On a weight basis, the ratio of poly(methyl methacrylate) or copolymer thereof to cellulosic derivative used to prepare the solution is in the range of from about 10:90 to 90:10, preferably about 30:70 to 70:30, and most preferably about 50:50.

The substrate upon which the separation layer is coated may be in flat sheet, hollow fiber, or other desired physical form, with the hollow fiber form being the most preferred.

Those skilled in the art will appreciate that porous substrates may be prepared in any of these forms and they are aware of the many methods available for their production and their ready commercial availability.

The invention is further described herein, for convenience of description, with particular reference to hollow fiber or polysulfone hollow fiber composite membranes. It will be understood, however, that the scope of the invention is not limited to the use of composite membranes in hollow fiber form. It is within the scope of the invention to employ any composite membrane composition prepared as herein for use in desired gas separation operations.

The hollow fiber membranes typically used in the art have continuous channels for fluid flow extending between the exterior and interior surfaces. Frequently, the pores have an average cross-sectional diameter less than about 2000 nm (20,000 angstroms) and in some hollow fibers the cross-sectional diameter is less than about 100 or 500 nm (1,000 or 5,000 angstroms). Advantageously, the walls of the hollow fibers are sufficiently thick that no special apparatus is required for their handling. Frequently, the hollow fibers may have outside diameters of about 20 to 1,000 »m, generally about 50 to 1,000 »m, and have walls of at least about 5 »m in thickness. The wall thickness in some hollow fibers may be up to about 200 or 300 »m.

In order to provide desirable fluxes through the hollow fibers, particularly using those hollow fibers having walls at least about 50 »m in thickness, the hollow fibers may have a substantial void volume. Voids are regions within the walls of the hollow fibers which are vacant of the material of the hollow fibers. Thus, when voids are present, the density of the hollow fiber is less than the density of the bulk material of the hollow fiber. Often, when voids are desired, the void volume of the hollow fibers is up to about 90, generally about 10 to 80, and sometimes about 20 or 30 to 70, percent based on the superficial volume, i.e., the volume contained within the gross dimensions, of the hollow fiber. The density of the hollow fiber can be essentially the same throughout its thickness, i.e., isotropic, or the hollow fiber can be characterized by having at least one relatively dense region within its thickness in barrier relationship to fluid flow through the wall of the hollow fiber, i.e., the hollow fiber is anisotropic. Generally, a relatively dense region of anisotropic hollow fibers is substantially at the exterior or interior of the hollow fiber, and preferably, the coating contacts this relatively dense region.

The material used for the hollow fiber may be a solid natural or synthetic substance. The selection of the material for the hollow fiber may be based on the heat resistance, solvent resistance, and/or mechanical strength of the hollow fiber, as well as other factors dictated by the intended separation process in which it will be used and the operating conditions to which it will be subjected. The hollow fibers may be flexible or substantially rigid. The material used for the hollow fibers may be inorganic to provide, e.g., hollow glass, ceramic, sintered metal, or the like, fibers. In the case of polymers, both addition and condensation polymers which can be fabricated in any suitable manner to provide porous hollow fibers, are included. Generally organic, or organic polymers mixed with inorganic materials (e.g., fillers), are used to prepare the hollow fibers. Typical polymers can be substituted or unsubstituted polymers and may be selected from polysulfones, such as bisphenol A polysulfone (sold under the mark "Udel" by Union Carbide Corporation) or polyether sulfone (sold under the mark "Victrex by Imperial Chemical Industries); polyacrylonitriles; polycarbonates; cellulose; polyamides and polyimides, including aryl polyamides and aryl polyimides; polyethers; poly(arylene oxides) such as poly(phenylene oxide); polyurethanes; polyesters (including polyarylates), such as poly(ethylene terephthalate), etc.; polysulfides; polymers from monomers having alpha-olefinic unsaturation other than mentioned above such as poly(ethylene), poly(propylene), poly(butene-1), poly(4-methyl 1-pentene), polyvinyls, e.g., poly(vinyl chloride), poly(vinyl fluoride), poly(vinylidene chloride), poly(vinylidene fluoride), and the like.

Substrates prepared from polysulfone are particularly preferred.

The polysulfone or other hollow fiber substrates employed in the practice of particular embodiments of the present invention can be prepared in accordance with conventional techniques well known in the art. Hollow fibers are generally spun from a dope composition of the desired fiber polymer, quenched, washed and dried. As disclosed by Cabasso, et al. in "Composite Hollow Fiber Membranes", Journal of Applied Polymer Science, Volume 23, 1509-1525 (1979), and in "Research and Development of NS-1 and Related Polysulfone Hollow Fibers for Reverse Osmosis Desalination of Seawater", Gulf South Research Institute, July 1985, Distributed by National Technical Information Service, U.S. Department of Commerce Publication PB 248,666, polysulfone hollow fibers can be spun from a ternary solution of polysulfone, poly(vinyl pyrrolidone) and dimethylacetamide, with the total polymeric concentration in the solution desirably being 40 to 52 weight %, and the polysulfone/poly(vinyl pyrrolidone) ratio being 1.5:2.0. The well known tube-in-tube jet technique is disclosed as being suitable for the spinning procedure, with water at about 21°C being the preferred outside quench medium for the fibers. The quench medium in the center of the fiber is desirably air. Quenching is followed by washing the fibers, conveniently with hot water at about 50 to 60°C. Following such washing, the hollow fibers are dried prior to being coated with the separation film layer to form the desired composite membrane. For this purpose, the polysulfone hollow fibers are typically dried by passage through a hot air drying column for a suitable period of time.

The dried polysulfone hollow fiber is coated with the coating solution of the present invention containing the poly(methyl methacrylate) and at least one cellulose derivative in a coating and drying sequence. This coating and drying sequence conveniently comprises the technique used and described in the Coplan, et al. patent, U.S. 4,467,001, which is incorporated herein by reference. Thus, the dried hollow fiber is passed through the coating solution contained in a coating vessel, and is then passed through a drier oven and a cure oven for contact with drying air or other suitable gas, and higher temperature curing air or other gas prior to being taken up on a winder or otherwise being processed or stored for eventual incorporation in membrane modules suitable for use in commercial fluid separation operations.

For the coating of polysulfone hollow fibers with a blend of poly(methyl methacrylate) and cellulose acetate, a preferred embodiment of the present invention, it is generally desirable to employ drying temperatures of from about 20°C to about 120°C. Those skilled in the art will appreciate that it is also possible to dry the separation layer on the support layer without employing the separate curing step described above.

The thickness of separating layer that is coated onto the porous support layer is less than about 0.4 »m, preferably is about 0.2 to about 0.05 »m, and most preferably is less than about 50 nm (500 angstroms). By weight, the ratio of poly(methyl methacrylate) or copolymer thereof to cellulosic derivatives present in the coating is in the range of from about 10:90 to 90:10, preferably about 30:70 to 70:30, and most preferably about 50:50.

In a preferred embodiment of the present invention, the substrate is subjected to a high temperature annealing process. Although it is preferable to anneal the substrate prior to its being coated with the poly(methyl methacrylate) and cellulosic derivative blend of the present invention, the annealing process may be carried out on the coated substrate as well. The resulting composite membrane formed from such an annealed substrate, when used with the coating of the present invention, provides for an even greater enhancement in both separation and permeation characteristics.

Most importantly, however, the annealing of the substrate provides for an increase in compaction resistance and membrane collapse pressure tolerance. Thus, it is well known that membrane compaction, particularly at high pressure and temperature conditions such as exist with membrane gas separation of, for example, ammonia vent recovery, may cause membrane compaction with the concurrent loss of permeation and separation characteristics or even total membrane collapse. With annealing, however, the substrate shows superior pressure compaction resistance.

More particularly, polysulfone support membranes or other support membranes applicable in the present invention having high glass transition temperatures (Tg), e.g., above 100°C, may be annealed at high temperatures that are close to their glass transition temperature, typically about 4 to 15°C below the Tg of the particular support substrate.

The substrates are annealed by exposing them for a very short period of time to high temperature under non-solvent and non-swelling environmental conditions.

The annealing process can be asymmetric in nature and can result in mostly surface modification or can further cause modification throughout the entire membrane structure. Polysulfone membranes, for example, can be annealed by exposure to high temperature air, or other hot non-swelling liquids, or to any other high temperature environment with non-solvent, non-swelling characteristics towards the substrate. More specifically, polysulfone fibers may be annealed by drying freshly spun fibers at 115°C by passage through a hot-air drying column which fibers are then annealed by passing them through another hot-air oven at a temperature of about 182°C in the case of bisphenol A polysulfone which is close to its glass transition temperature of about 184° to 186°C. The residence time in the oven is generally about 5 seconds to 4 minutes, preferably about 10 to 30 seconds.

In use, the composite membrane will generally be assembled as part of a membrane separating device. The membrane device is designed to carry out a selective separation of at least one component from a gaseous stream mixture. The membrane apparatus will typically consist of an enclosure and a membrane assembly positioned therein. The membrane assembly can be constructed in the form of a spiral wound cartridge, a hollow fiber bundle, a pleated flat sheet membrane assembly, and like assemblies common in the membrane industry. The membrane assembly is constructed so as to have a feed-surface side and an opposite permeate exit side. The enclosure is constructed so as to enable the feed stream mixture to be brought into contact with the membrane feed-surface side. Conduit means are provided for the removal of the part of the feed stream that did not permeate through the membrane, and for the separate removal of the permeate components that have passed through the membrane.

In conducting fluid separations, including concentrations, employing the composite membranes of the present invention, the exit side of the membrane is maintained at a lower thermodynamic potential for at least one permeating component than the thermodynamic potential at the feed side. The driving force for the desired permeation through the membrane is a differential in thermodynamic potential across the membrane, for instance, as provided by a differential in partial pressure. Permeating components pass into and through the membrane and can be removed from the vicinity of the exit side of the membrane to maintain the desired driving force for the permeating fluid. The functionality of the membrane does not depend upon the direction of feed flow or the surface of the membrane which is first contacted by the fluid feed mixture.

The present invention can advantageously be employed in a wide variety of practical commercial operations, such as air separation, the recovery of hydrogen from ammonia purge gas and from refinery streams, carbon dioxide and methane separations in a variety of operations, hydrogen removal from a mixture of hydrogen and methane, or hydrogen removal from a mixture of nitrogen and methane, and the like. In all such embodiments, it will be appreciated that the separation layer primarily determines the separation characteristics of the composite membranes and that it will be selected for its desired selectivity with respect to the gaseous mixture desired to be separated and/or concentrated, and that the support layer will also be selected for its overall convenience and combination of permeability characteristics as it pertains to any given separation.

By means of the present invention, a membrane forming material is provided which may be used as a separation layer coating in a composite membrane, which coating unexpectedly and desirably possesses the most desirable characteristics of each of the materials which comprise this coating. In other words, the coating possesses the best characteristics of the poly(methyl methacrylate) or copolymer thereof and the cellulosic derivatives which are used to form the coating blend. Accordingly, this membrane forming material has the advantage of being able to consistently form continuous, flexible films substantially free from voids and pinholes which, when used as a coating layer, results in composite membranes having substantially enhanced selectivity, flux and permeation rates.

As used herein, it will be understood that the selectivity, or separation factor, of a membrane or membrane module assembly represents the ratio of the permeate rate of the more permeable to the less permeable component of a mixture being separated which permeability is expressed in cm³(STP)/cm²·day·kPa (ft³(STP)/ft²·day·psi).

The invention is hereinafter further described with respect to various illustrative examples of the practice thereof. It should be understood, however, that such examples should not be construed as limiting the scope of the invention which is set forth in the appended claims.

### EXAMPLE 1

A composite hollow fiber membrane is prepared by coating polysulfone hollow fibers with a blend of poly(methyl methacrylate) and cellulose acetate.

The polysulfone hollow fibers are spun from a polysulfone dope solution, quenched, washed and dried following the Cabasso et al. techniques referred to above.

A solution of poly(methyl methacrylate) is prepared by dissolving 0.7% by weight poly(methyl methacrylate), Polyscience (MW 75000), in acetic acid/isopropanol mixture (50/50% by volume). A solution of cellulose acetate is prepared by dissolving 0.7% by weight cellulose acetate (CA-398-10) obtained from Eastman Chemical Products Inc., in acetic acid/isopropanol (50/50% by volume). The poly(methyl methacrylate) solution and the cellulose acetate solution are then added together (50/50% by volume) and filtered through a 1.5 micron glass filter.

The polysulfone hollow fibers are coated by the fiber passing through the coating solution. The thusly coated fibers are then passed through a drier oven prior to being taken up on a winder. The coating and drying sequence is further described in Coplan et al., U.S. 4,467,001, the contents of which are incorporated herein by reference.

A hollow fiber separatory module is constructed utilizing an annulus of said hollow fibers with the open ends thereof encased in a potting compound and a collection chamber communicating with said open ends adjacent to said potting compounds. Further details relating to said separatory module are contained in the Coplan, et al. patent, U.S. 4,207,192, the contents of which are incorporated herein by reference.

The thusly prepared composite membrane is tested for its gas separation characteristics against a mixed gas feed of 70% hydrogen and 30% nitrogen at 14.8 bar (200 psig) and 25°C. The following gas separation characteristics are exhibited: the separation factor between hydrogen and nitrogen is 125 and the permeation rate of hydrogen is 2.7 cm³(STP)/cm²·day·kPa (0.60 ft³(STP)/ft²·day·psi).

### EXAMPLE 2

Example 1 is repeated with the exception being that the polysulfone substrate is first annealed prior to it being coated with a blend of poly(methyl methacrylate) and cellulose acetate.

The polysulfone fibers are annealed by passing the fibers through a hot-air oven maintained at a temperature of 182°C for a period of 10 seconds.

The annealed fibers are then coated in a manner set forth in Example 1 with the solution comprised of poly(methyl methacrylate) and cellulose acetate resulting in the following gas separation characteristics: the separation factor between hydrogen and nitrogen is 140 and the permeation rate of hydrogen is 4.4 cm³(STP)/cm²·day·kPa (1.0 ft³(STP)/ft²·day·psi).

### EXAMPLE 3 (COMPARATIVE EXAMPLE)

Example 2 is repeated with the exception being that instead of using a blend of poly(methyl methacrylate) and cellulose acetate, only cellulose acetate is coated onto the polysulfone hollow fibers.

In this comparison example, which is not in accordance with the present invention, the thusly prepared composite membrane is tested for its gas separation characteristics against the same mixed gas feed as described in Example 2, namely 70% hydrogen and 30% nitrogen at 14.8 bar (200 psig) and 25°C. The following gas separation characteristics are exhibited: the separation factor between hydrogen and nitrogen is 80 and the permeation rate of hydrogen is (1.0 ft³(STP)/ft²·day·psi).

### EXAMPLE 4 (COMPARATIVE EXAMPLE)

Example 2 is repeated with the exception being that instead of using a blend of poly(methyl methacrylate) and cellulose acetate, only poly(methyl methacrylate) is coated onto the polysulfone hollow fibers.

In this comparison example, which is not in accordance with the present invention, the thusly prepared composite membrane is tested for its gas separation characteristics against the same mixed gas feed as described in Example 2, namely 70% hydrogen and 30% nitrogen at 14.8 bar (200 psig) and 25°C. The following gas separation characteristics are exhibited: the separation factor between hydrogen and nitrogen is 224 and the permeation rate of hydrogen is 2.6 cm³(STP)/cm²·day·kPa (0.59 ft³(STP)/ft²·day·psi).

It is further noted that composite membranes prepared by coating poly(methyl methacrylate) on a substrate are difficult to reproduce due to the occurrence of defects and its inherent brittleness.

### EXAMPLE 5

Example 2 is repeated with the exception being that instead of using a blend of poly(methyl methacrylate) and cellulose acetate in a solution of 50% acetic acid/50% isopropanol (50/50% by volume), a blend of poly(methyl methacrylate) and cellulose acetate in a solution of nitromethane is used.

The annealed fibers are then coated in a manner set forth in Example 2 with poly(methyl methacrylate) and cellulose acetate. The thusly prepared composite membrane is tested for its gas separation characteristics against the same mixed gas feed of Example 2, namely 70% hydrogen and 30% nitrogen at 14.8 bar (200 psig) and 25°C. The following gas separation characteristics are exhibited: the separation factor between hydrogen and nitrogen is 144 and the permeation rate of hydrogen is 3.5 cm³(STP)/cm²·day·kPa (0.8 ft³(STP)/ft²·day·psi).

## Claims

1. A composite membrane capable of selectively permeating at least one more readily permeable component of a gaseous mixture comprising:
(a) a porous support layer having substantially no separation characteristics with respect to said gaseous mixture; and
(b) a separation layer positioned on the support layer comprised of a mixture of poly(methyl methacrylate) or a copolymer thereof containing at least 50 % by weight of poly(methyl methacrylate) and at least one cellulosic derivative, wherein the ratio by weight of the poly(methyl methacrylate) or copolymer thereof to the cellulose derivative is from about 10:90 to about 90:10, said separation layer having a thickness of less than about 0.4 »m and substantially determining the separation characteristics of the composite membrane.

2. The composite membrane of claim 1, wherein the ratio is from about 30:70 to about 70:30.

3. The composite membrane of claim 1, wherein the ratio is about 50:50.

4. The composite membrane of claim 1, wherein the copolymer is comprised of methyl methacrylate and ethyl methacrylate monomer units.

5. The composite membrane of claim 1, wherein the copolymer is comprised of methyl methacrylate and n-butyl methacrylate monomer units.

6. The composite membrane of claim 1, wherein the copolymer is comprised of methyl methacrylate and iso-butyl methacrylate monomer units.

7. The composite membrane of any one of the preceding claims, wherein the cellulosic derivative is selected from the group consisting of cellulose acetate, cellulose acetate butyrate, cellulose propionate, cellulose butyrate, cellulose acetate propionate, and mixtures thereof.

8. The composite membrane of claim 7, wherein the cellulosic derivative is cellulose acetate.

9. The composite membrane of claim 8, wherein the cellulose acetate has a degree of acetylation of greater than 2.0.

10. The composite membrane of any one of the preceding claims, wherein the thickness of the separation layer is from about 0.05 to about 0.2 »m.

11. The composite membrane of any one of the preceding claims, wherein the support layer comprises a polymeric material.

12. The composite membrane of claim 11, wherein the support layer comprises at least one of polysulfone, polyolefins, polyphenylenesulfide, polyether ketone, polyamides and polyimides.

13. The composite membrane of claim 11, wherein the support layer is polysulfone.

14. The composite membrane of claim 1, wherein the cellulosic derivative of the separation layer comprises cellulose acetate and the support layer comprises polysulfone.

15. The composite membrane of claim 11, wherein the support layer is an annealed polymeric material.

16. The composite membrane of any one of the preceding claims, wherein the composite membrane is in hollow fiber form.

17. A process for the preparation of a composite membrane capable of selectively permeating at least one more readily permeable component of a gaseous mixture comprising:
(a) providing a support layer;
(b) providing a solution containing a mixture of poly(methyl methacrylate) or a copolymer thereof containing at least 50 % by weight of poly(methyl methacrylate), at least one cellulosic derivative and a solvent therefore, which solvent is a non-solvent for the support layer, wherein the ratio by weight of the poly(methyl methacrylate) or copolymer thereof to the cellulose derivative is from about 10:90 to about 90:10;
(c) coating the support layer with the solution to provide on the support layer a separation layer having a thickness of less than about 0.4 »m;
(d) drying said separation layer on the support layer to form the composite membrane, wherein the separation layer determines the separation characteristics of the membrane and the support layer has substantially no separation characteristics with respect to said gaseous mixture.

18. The process of claim 17, wherein the ratio by volume of poly(methyl methacrylate) or copolymer thereof to cellulose derivative in solution is from about 70:30 to about 30:70.

19. The process of claim 17, wherein the solvent for the solution includes a mixture of acetic acid and isopropanol; a mixture of acetic acid, a C₁-C₄ aliphatic alcohol and water; nitromethane; a mixture of nitromethane and a C₁-C₄ aliphatic alcohol; acetone; or a mixture of acetone and a C₁-C₄ aliphatic alcohol; or a mixture of acetone, a C₁-C₄ aliphatic alcohol and water; wherein the support layer is polysulfone.

20. The process of claim 17, wherein the solvent for the solution includes a mixture of acetic acid, isopropanol and water when the support layer is polysulfone.

21. The process of claim 17, wherein the cellulosic derivative is selected from the group consisting of cellulose acetate, cellulose acetate butyrate, cellulose propionate, cellulose butyrate, cellulose acetate propionate, and mixtures thereof.

22. The process of claim 21, wherein the cellulosic derivative is cellulose acetate.

23. The process of claim 22, wherein the cellulose acetate has a degree of acetylation that is greater than 2.0.

24. The process of claim 17, wherein the copolymer is comprised of methyl methacrylate and ethyl methacrylate monomer units.

25. The process of claim 17, wherein the copolymer is comprised of methyl methacrylate and n-butyl methacrylate monomer units.

26. The process of claim 17, wherein the copolymer is comprised of methyl methacrylate and iso-butyl methacrylate monomer units.

27. The process of any one of claims 17 to 26, wherein the thickness of the separating layer is from about 0.05 »m to about 0.2 »m.

28. The process of any one of claims 17 to 27, wherein the support layer comprises a polymeric material.

29. The process of claim 28, wherein the support layer comprises at least one of polysulfone, polyolefins, polyphenylenesulfide. polyether ketone, polyamides and polyimides.

30. The process of claim 29, wherein the support layer is polysulfone.

31. The process of claim 17, wherein the cellulose derivative of the separation layer comprises cellulose acetate and the support layer comprises polysulfone.

32. The process of claim 17, wherein the support layer is an annealed polymeric material.

33. The process of any one of claims 17 to 32, wherein the composite membrane is in hollow fiber form.

34. A method for separating a gas in a gaseous mixture from at least one other gas in said gaseous mixture by selective permeation and providing a permeated product containing at least one permeating gas, comprising: contacting the gaseous mixture with one surface of a composite membrane, which composite membrane, with respect to at least one pair of gases of said gaseous mixture, exhibits selective permeation of one gas of said pair of gases over that of the remaining gas of said pair of gases, and which composite membrane comprises a porous support layer having substantially no separation characteristics with respect to said gas mixture and a separation layer positioned on the support layer comprised of a mixture of poly(methyl methacrylate) or copolymer thereof containing at least 50 % by weight of poly(methyl methacrylate) and at least one cellulosic derivative, wherein the ratio by weight of the poly(methyl methacrylate) or copolymer thereof to the cellulose derivative is from about 10:90 to about 90:10, said separation layer having a thickness of less thant about 0.4 »m and substantially determining the separation characteristics of the composite membrane; permeating said at least one permeating gas into and through the composite membrane; and removing from the vicinity of the opposite surface of the composite membrane a permeated product having a different proportion of said at least one gas of said gaseous mixture to said at least one other gas of said gaseous mixture than the proportion in the gaseous mixture of said at least one gas to said at least one other gas.

35. The method of claim 34, wherein the said at least one gas comprises hydrogen and the gas mixture comprises hydrogen and nitrogen.

36. The method of claim 34, wherein the said at least one gas comprises hydrogen and the gas mixture comprises hydrogen and methane.

37. The method of claim 34, wherein the said at least one gas comprises carbon dioxide and the gas mixture comprises carbon dioxide and methane.

38. The method of claim 34, wherein the said at least one gas comprises nitrogen and the gas mixture comprises nitrogen and methane.

39. The method of claim 34, wherein the said at least one gas comprises oxygen and the gas mixture comprises air.

40. The method of claim 34, wherein the copolymer is comprised of methyl methacrylate and ethyl methacrylate monomer units.

41. The method of claim 34, wherein the copolymer is comprised of methyl methacrylate and n-butyl methacrylate monomer units.

42. The method of claim 34, wherein the copolymer is comprised of methyl methacrylate and iso-butyl methacrylate monomer units.

43. The method of claim 34, wherein the cellulosic derivative is selected from the group consisting of cellulose acetate, cellulose acetate butyrate, cellulose propionate, cellulose butyrate, cellulose acetate propionate, and mixtures thereof.

44. The method of claim 34, wherein the cellulosic derivative is cellulose acetate.

45. The method of claim 44, wherein the cellulose acetate has a degree of acetylation greater than 2.0.

46. The method of claim 34, wherein the support layer comprises a polymeric material.

47. The method of claim 46, wherein the support layer comprises at least one of polysulfone, polyolefins, polyphenylenesulfide, polyether ketone, polyamides and polyimides.

48. The method of claim 46, wherein the support layer is polysulfone.

49. The method of claim 46, wherein the support layer is an annealed polymeric material.

50. The method of claim 34, wherein the cellulosic derivative of the separation layer comprises cellulose acetate and the support layer comprises polysulfone.

51. The method of any one of claims 34 to 50, wherein the composite membrane is in hollow fiber form.

## Patentansprüche

1. Verbundmembran, die in der Lage ist, mindestens eine leichter permeable Komponente eines gasförmigen Gemisches selektiv zu permeieren, mit:
(a) einer porösen Trägerschicht, die im wesentlichen keine Trenneigenschaften mit Bezug auf das gasförmige Gemisch hat; und
(b) einer auf der Trägerschicht befindlichen Trennschicht aus einem Gemisch von Poly(methylmethacrylat) oder einem mindestens 50 Gew.Prozent Poly(methylmethacrylat) enthaltenden Copolymer desselben und mindestens einem Zellulosederivat enthält, wobei das Gewichtsverhältnis zwischen dem Poly(methylmethacrylat) oder dessen Copolymer und dem Zellulosederivat zwischen etwa 10:90 und etwa 90:10 liegt, und wobei die Trennschicht eine Dicke von weniger als etwa 0,4 »m hat und im wesentlichen die Trenneigenschaften der Verbundmembran bestimmt.

2. Verbundmembran nach Anspruch 1, wobei das Verhältnis zwischen etwa 30:70 und etwa 70:30 liegt.

3. Verbundmembran nach Anspruch 1, wobei das Verhältnis etwa 50:50 beträgt.

4. Verbundmembran nach Anspruch 1, wobei das Copolymer aus Methylmethacrylat- und Ethylmethacrylat-Monomereinheiten besteht.

5. Verbundmembran nach Anspruch 1, wobei das Copolymer aus Methylmethacrylat- und n-Butylmethacrylat-Monomereinheiten besteht.

6. Verbundmembran nach Anspruch 1, wobei das Copolymer aus Methylmethacrylat- und und Iso-Butylmethacrylat-Monomereinheiten besteht.

7. Verbundmembran nach einem der vorhergehenden Ansprüche, wobei das Zellulosederivat aus der aus Zelluloseacetat, Zelluloseacetatbutyrat, Zellulosepropionat, Zellulosebutyrat, Zelluloseacetatpropionat und Gemischen derselben bestehenden Gruppe ausgewählt ist.

8. Verbundmembran nach Anspruch 7, wobei das Zellulosederivat Zelluloseacetat ist.

9. Verbundmembran nach Anspruch 8, wobei das Zelluloseacetat einen Acetylierungsgrad von mehr als 2,0 hat.

10. Verbundmembran nach einem der vorhergehenden Ansprüche, wobei die Dicke der Trennschicht zwischen etwa 0,05 und etwa 0,2 »m liegt.

11. Verbundmembran nach einem der vorhergehenden Ansprüche, wobei die Trägerschicht einen Polymerwerkstoff aufweist.

12. Verbundmembran nach Anspruch 11, wobei die Trägerschicht mindestens einen der Werkstoffe Polysulfon, Polyolefine, Polyphenylensulfid, Polyetherketon, Polyamide und Polyimide aufweist.

13. Verbundmembran nach Anspruch 11, wobei die Trägerschicht aus Polysulfon besteht.

14. Verbundmembran nach Anspruch 1, wobei das Zellulosederivat der Trennschicht Zelluloseacetat aufweist und die Trägerschicht Polysulfon aufweist.

15. Verbundmembran nach Anspruch 11, wobei die Trägerschicht aus einem wärmebehandelten Polymerwerkstoff besteht.

16. Verbundmembran nach einem der vorhergehenden Ansprüche, wobei die Verbundmembran in Hohlfaserform vorliegt.

17. Verfahren zum Herstellen einer Verbundmembran, die in der Lage ist, mindestens eine leichter permeable Komponente eines gasförmigen Gemisches selektiv zu permeieren, bei dem:
(a) eine Trägerschicht vorgesehen wird;
(b) eine Lösung vorgesehen wird, die ein Gemisch aus Poly(methylmethacrylat) oder einem mindestens 50 Gew.Prozent Poly(methylmethacrylat) enthaltenden Copolymer desselben, mindestens einem Zellulosederivat und einem Lösungsmittel dafür enthält, wobei das Lösungsmittel ein Nichtlösungsmittel für die Trägerschicht ist und wobei das Gewichtsverhältnis zwischen dem Poly(methylmethacrylat) oder dessen Copolymer und dem Zellulosederivat zwischen etwa 10:90 und etwa 90:10 liegt;
(c) die Trägerschicht mit der Lösung beschichtet wird, um auf der Trägerschicht eine Trennschicht mit einer Dicke von weniger als etwa 0,4 »m zu erhalten;
(d) die Trennschicht auf der Trägerschicht getrocknet wird, um die Verbundmembran auszubilden, wobei die Trennschicht die Trenneigenschaften der Membran bestimmt und die Trägerschicht im wesentlichen keine Trenneigenschalten mit Bezug auf das gasförmige Gemisch hat.

18. Verfahren nach Anspruch 17, wobei das Volumenverhältnis von Poly(methylmethacrylat) oder dessen Copolymer zu Zellulosderivat in der Lösung zwischen etwa 70:30 und etwa 30:70 liegt.

19. Verfahren nach Anspruch 17, wobei das Lösungsmittel für die Lösung ein Gemisch aus Essigsäure und Isopropanol; ein Gemisch aus Essigsäure, einem aliphatischen C₁-C₄-Alkohol und Wasser; Nitromethan; ein Gemisch aus Nitromethan und einem aliphatischen C₁-C₄-Alkohol; Aceton; oder ein Gemisch aus Aceton und einem aliphatischen C₁-C₄-Alkohol; oder ein Gemisch aus Aceton, einem aliphatischen C₁-C₄-Alkohol und Wasser aufweist, wobei die Trägerschicht aus Polysulfon besteht.

20. Verfahren nach Anspruch 17, wobei das Lösungsmittel für die Lösung ein Gemisch aus Essigsäure, Isopropanol und Wasser aufweist, wenn die Trägerschicht aus Polysulfon besteht.

21. Verfahren nach Anspruch 17, wobei das Zellulosederivat aus der aus Zellulosacetat, Zelluloseacetatbutyrat, Zellulosepropionat, Zellulosebutyrat, Zelluloseacetatpropionat und Gemischen derselben bestehenden Gruppe ausgewählt wird.

22. Verfahren nach Anspruch 21, wobei das Zellulosederivat Zelluloseacetat ist.

23. Verfahren nach Anspruch 22, wobei das Zelluloseacetat einen Acetylirierungsgrad von mehr als 2,0 hat.

24. Verfahren nach Anspruch 17, wobei das Copolymer aus Methylmethacrylat- und Ehtylmethacrylat-Monomereinheiten besteht.

25. Verfahren nach Anspruch 17, wobei das Copolymer aus Methylmethacrylat- und n-Butylmethacrylat-Monomereinheiten besteht.

26. Verfahren nach Anspruch 17, wobei das Copolymer aus Methylmethacrylat- und Iso-Butylmethacrylat-Monomereinheiten besteht.

27. Verfahren nach einem der Ansprüche 17 bis 26, wobei die Dicke der Trennschicht zwischen etwa 0,05 »m und etwa 0,2 »m liegt.

28. Verfahren nach einem der Ansprüche 17 bis 27, wobei die Trägerschicht einen Polymerwerkstoff aufweist.

29. Verfahren nach Anspruch 28, wobei die Trägerschicht mindestens einen der Werkstoffe Polysulfon, Polyolefine, Polyphenylensulfid, Polyetherketon, Polyamide und Polyimide aufweist.

30. Verfahren nach Anspruch 29, wobei die Trägerschicht aus Polysulfon besteht.

31. Verfahren nach Anspruch 17, wobei das Zellulosederivat der Trennschicht Zelluloseacetat aufweist und die Trägerschicht Polysulfon aufweist.

32. Verfahren nach Anspruch 17, wobei die Trägerschicht aus einem wärmebehandelten Polymerwerkstoff besteht.

33. Verfahren nach einem der Ansprüche 17 bis 32, wobei die Verbundmembran Hohlfaserform hat.

34. Verfahren zum Abtrennen eines in einem gasförmigen Gemisch befindlichen Gases von mindestens einem anderen Gas in dem gasförmigen Gemisch durch selektive Permeation und zum Bereitstellen eines permeierten Produkts, das mindestens ein permeierendes Gas enthält, bei dem: das gasförmige Gemisch mit einer Oberfläche einer Verbundmembran in Kontakt gebracht wird, die mit Bezug auf mindestens zwei Gase des gasförmigen Gemisches für eine selektive Permeation einer der beiden Gase gegenüber dem anderen der beiden Gase sorgt, wobei die Verbundmembran eine poröse Trägerschicht, die im wesentlichen keine Trenneigenschaften mit Bezug auf das Gasgemisch hat, und eine auf der Trägerschicht befindliche Trennschicht aufweist, die aus einem Gemisch von Poly(methylmethacrylat) oder einem mindestens 50 Gew.Prozent Poly(methylmetha-crylat) enthaltenden Copolymer desselben und mindestens einem Zellulosederivat besteht, wobei das Gewichtsverhältnis zwischen dem Poly(methylmethacrylat) oder dessen Copolymer und dem Zellulosderivat zwischen etwa 10:90 und etwa 90:10 liegt und wobei die Trennschicht eine Dicke von weniger als etwa 0,4 »m hat und im wesentlichen die Trenneigenschaften der Verbundmembran bestimmt; das mindestens eine permeierende Gas zur Permeation in und durch die Verbundmembran veranlaßt wird; und vom Bereich der gegenüberliegenden Oberfläche der Verbundmembran ein permeiertes Produkt abgeführt wird, dessen Anteil an dem mindestens einen Gas des gasförmigen Gemisches zu dem mindestens einen anderen Gas des gasförmigen Gemisches sich von dem Anteil an dem mindestens einen Gas zu dem mindestens einen anderen Gas in dem gasförmigen Gemisch unterscheidet.

35. Verfahren nach Anspruch 34, wobei das mindestens eine Gas Wasserstoff aufweist und das Gasgemisch Wasserstoff und Stickstoff aufweist.

36. Verfahren nach Anspruch 34, wobei das mindestens eine Gas Wasserstoff aufweist und das Gasgemisch Wasserstoff und Methan aufweist.

37. Verfahren nach Anspruch 34, wobei das mindestens eine Gas Kohlendioxid aufweist und das Gasgemisch Kohlendioxid und Methan aufweist.

38. Verfahren nach Anspruch 34, wobei das mindestens eine Gas Stickstoff aufweist und das Gasgemisch Stickstoff und Methan aufweist.

39. Verfahren nach Anspruch 34, wobei das mindestens eine Gas Sauerstoff aufweist und das Gasgemisch Luft aufweist.

40. Verfahren nach Anspruch 34, wobei das Copolymer aus Methylmethacrylat- und Ethylmethacrylat-Monomereinheiten besteht.

41. Verfahren nach Anspruch 34, wobei das Copolymer aus Methylmethacrylat- und n-Butylmethacrylat-Monomereinheiten besteht.

42. Verfahren nach Anspruch 34, wobei das Copolymer aus Methylmethacrylat- und Iso-Butylmethalcrylat-Monomereinheiten besteht.

43. Verfahren nach Anspruch 34, wobei das Zellulosederivat aus der aus Zelluloseacetat, Zelluloseacetatbutyrat, Zellulosepropionat, Zellulosebutyrat, Zelluloseacetatpropionat und Gemischen derselben bestehenden Gruppe ausgewählt ist.

44. Verfahren nach Anspruch 34, wobei das Zellulosederivat Zelluloseacetat ist.

45. Verfahren nach Anspruch 44, wobei das Zelluloseacetat einen Acetylierungsgrad von mehr als 2,0 hat.

46. Verfahren nach Anspruch 34, wobei die Trägerschicht einen Polymerwerkstoff aufweist.

47. Verfahren nach Anspruch 46, wobei die Trägerschicht mindestens einen der Werkstoffe Polysulfon, Polyolefine, Polyphenylensulfid, Polyetherketon, Polyamide und Polyimide aufweist.

48. Verfahren nach Anspruch 46, wobei die Trägerschicht aus Polysulfon besteht.

49. Verfahren nach Anspruch 46, wobei die Trägerschicht aus einem wärmebehandelten Polymerwerkstoff besteht.

50. Verfahren nach Anspruch 34, wobei das Zellulosederivat der Trennschicht Zelluloseacetat aufweist und die Trägerschicht Polysulfon aufweist.

51. Verfahren nach einem der Ansprüche 34 bis 50, wobei die Verbundmembran in Hohlfaserform vorliegt.

## Revendications

1. Membrane composite apte à la perméation sélective d'au moins un constituant, de perméation plus aisée, d'un mélange gazeux, comprenant :
(a) une couche poreuse de support ne possédant pratiquement aucune caractéristique de séparation vis-à-vis dudit mélange gazeux ; et
(b) une couche de séparation positionnée sur la couche de support, constituée d'un mélange de poly(méthacrylate de méthyle), ou d'un de ses copolymères contenant au moins 50 % en poids de poly(méthacrylate de méthyle), et d'au moins un dérivé cellulosique, dans laquelle le rapport pondéral du poly(méthacrylate de méthyle) ou de son copolymère au dérivé cellulosique est compris dans l'intervalle d'environ 10:90 à environ 90:10, ladite couche de séparation ayant une épaisseur inférieure à environ 0,4 »m et déterminant essentiellement les caractéristiques de séparation de la membrane composite.

2. Membrane composite suivant la revendication 1, dans laquelle le rapport est compris dans l'intervalle d'environ 30:70 à environ 70:30.

3. Membrane composite suivant la revendication 1, dans laquelle le rapport est égal à environ 50:50.

4. Membrane composite suivant la revendication 1, dans laquelle le copolymère est constitué de motifs de monomères méthacrylate de méthyle et méthacrylate d'éthyle.

5. Membrane composite suivant la revendication 1, dans laquelle le copolymère est constitué de motifs de monomères méthacrylate de méthyle et méthacrylate de n-butyle.

6. Membrane composite suivant la revendication 1, dans laquelle le copolymère est constitué de motifs de monomères méthacrylate de méthyle et méthacrylate d'isobutyle.

7. Membrane composite suivant l'une quelconque des revendications précédentes, dans laquelle le dérivé cellulosique est choisi dans le groupe consistant en acétate de cellulose, acétobutyrate de cellulose, propionate de cellulose, butyrate de cellulose, acétopropionate de cellulose et leurs mélanges.

8. Membrane composite suivant la revendication 7, dans laquelle le dérivé cellulosique est l'acétate de cellulose.

9. Membrane composite suivant la revendication 8, dans laquelle l'acétate de cellulose possède un degré d'acétylation supérieur à 2,0.

10. Membrane composite suivant l'une quelconque des revendications précédentes, dans laquelle l'épaisseur de la couche de séparation est comprise dans l'intervalle d'environ 0,05 à environ 0,2 »m.

11. Membrane composite suivant l'une quelconque des revendications précédentes, dans laquelle la couche de support comprend une matière polymérique.

12. Membrane composite suivant la revendication 11, dans laquelle la couche de support comprend au moins une matière polymérique choisie entre une polysulfone, des polyoléfines, un polymère de sulfure de phénylène, une polyéthercétone, des polyamides et des polyimides.

13. Membrane composite suivant la revendication 11, dans laquelle la couche de support est constituée d'une polysulfone.

14. Membrane composite suivant la revendication 1, dans laquelle le dérivé cellulosique de la couche de séparation comprend de l'acétate de cellulose et la couche de support comprend une polysulfone.

15. Membrane composite suivant la revendication 11, dans laquelle la couche de support est une matière polymérique ayant subi un recuit.

16. Membrane composite suivant l'une quelconque des revendications précédentes, qui est sous forme de fibres creuses.

17. Procédé de préparation d'une membrane composite apte à la perméation sélective d'au moins un constituant, passant plus aisément, d'un mélange gazeux, comprenant :
(a) la formation d'une couche de support ;
(b) la préparation d'une solution contenant un mélange de poly(méthacrylate de méthyle), ou d'un de ses copolymères contenant au moins 50 % en poids de poly(méthacrylate de méthyle), d'au moins un dérivé cellulosique et d'un solvant de ces composés, solvant qui est un non-solvant pour la couche de support, le rapport pondéral du poly(méthacrylate de méthyle) ou de son copolymère au dérivé cellulosique étant compris dans l'intervalle d'environ 10:90 à environ 90:10 ;
(c) le revêtement de la couche de support avec la solution pour former sur la couche de support une couche de séparation ayant une épaisseur inférieure à environ 0,4 »m ;
(d) le séchage de ladite couche de séparation sur la couche de support pour former la membrane composite, dans lequel la couche de séparation détermine les caractéristiques de séparation de la membrane et la couche de support ne possède pratiquement aucune caractéristique de séparation vis-à-vis dudit mélange gazeux.

18. Procédé suivant la revendication 17, dans lequel le rapport volumique du poly(méthacrylate de méthyle) ou de son copolymère au dérivé cellulosique en solution est compris dans l'intervalle d'environ 70:30 à environ 30:70.

19. Procédé suivant la revendication 17, dans lequel le solvant pour la solution comprend un mélange d'acide acétique et d'isopropanol ; un mélange d'acide acétique, d'un alcool aliphatique en C₁ à C₄ et d'eau ; le nitrométhane ; un mélange de nitrométhane et d'un alcool aliphatique en C₁ à C₄ ; l'acétone ; ou un mélange d'acétone et d'un alcool aliphatique en C₁ à C₄ ; ou un mélange d'acétone, d'un alcool aliphatique en C₁ à C₄ et d'eau ; la couche de support étant constituée d'une polysulfone.

20. Procédé suivant la revendication 17, dans lequel le solvant pour la solution comprend un mélange d'acide acétique, d'isopropanol et d'eau lorsque la couche de support est constituée d'une polysulfone.

21. Procédé suivant la revendication 17, dans lequel le dérivé cellulosique est choisi dans le groupe consistant en acétate de cellulose, acétobutyrate de cellulose, propionate de cellulose, butyrate de cellulose, acétopropionate de cellulose et leurs mélanges.

22. Procédé suivant la revendication 21, dans lequel le dérivé cellulosique est l'acétate de cellulose.

23. Procédé suivant la revendication 22, dans lequel l'acétate de cellulose possède un degré d'acétylation qui est supérieur à 2,0.

24. Procédé suivant la revendication 17, dans lequel le copolymère est constitué de motifs de monomères méthacrylate de méthyle et méthacrylate d'éthyle.

25. Procédé suivant la revendication 17, dans lequel le copolymère est constitué de motifs de monomères méthacrylate de méthyle et méthacrylate de n-butyle.

26. Procédé suivant la revendication 17, dans lequel le copolymère est constitué de motifs de monomères méthacrylate de méthyle et méthacrylate d'isobutyle.

27. Procédé suivant l'une quelconque des revendications 17 à 26, dans lequel l'épaisseur de la couche de séparation est comprise dans l'intervalle d'environ 0,05 »m à environ 0,2 »m.

28. Procédé suivant l'une quelconque des revendications 17 à 27, dans lequel la couche de support comprend une matière polymérique.

29. Procédé suivant la revendication 28, dans lequel la couche de support comprend au moins une matière polymérique choisie entre une polysulfone, des polyoléfines, un polymère de sulfure de phénylène, une polyéthercétone, des polyamides et des polyimides.

30. Procédé suivant la revendication 29, dans lequel la couche de support est constituée d'une polysulfone.

31. Procédé suivant la revendication 17, dans lequel le dérivé cellulosique de la couche de séparation comprend de l'acétate de cellulose et la couche de support comprend une polysulfone.

32. Procédé suivant la revendication 17, dans lequel la couche de support est constituée d'une matière polymérique ayant subi un recuit.

33. Procédé suivant l'une quelconque des revendications 17 à 32, dans lequel la membrane composite est sous forme de fibres creuses.

34. Procédé pour séparer un gaz présent dans un mélange gazeux d'au moins un autre gaz présent dans ledit mélange gazeux par perméation sélective et formation d'un produit de perméation contenant au moins un gaz de perméation, comprenant : la mise en contact du mélange gazeux avec une surface d'une membrane composite, membrane composite qui, vis-à-vis d'au moins une paire de gaz dudit mélange gazeux, est douée de perméation sélective vis-à-vis d'un gaz de ladite paire de gaz par rapport au gaz restant de ladite paire de gaz, et membrane composite qui comprend une couche poreuse de support ne présentant pratiquement aucune caractéristique de séparation vis-à-vis dudit mélange de gaz et une couche de séparation, positionnée sur la couche de support, constituée d'un mélange de poly(méthacrylate de méthyle), ou d'un de ses copolymères contenant au moins 50 % en poids de poly(méthacrylate de méthyle), et d'au moins un dérivé cellulosique, dans lequel le rapport pondéral du poly(méthacrylate de méthyle) ou de son copolymère au dérivé cellulosique est compris dans l'intervalle d'environ 10:90 à environ 90:10, ladite couche de séparation ayant une épaisseur inférieure à environ 0,4 »m et déterminant essentiellement les caractéristiques de séparation de la membrane composite ; la perméation dudit gaz de perméation d'au moins un type dans et à travers la membrane composite ; et l'évacuation hors de la proximité de la surface opposée de la membrane composite d'un produit de perméation possédant un rapport dudit gaz d'au moins un type dudit mélange gazeux audit autre gaz d'au moins un type dudit mélange gazeux différent du rapport dans le mélange gazeux dudit gaz d'au moins un type audit autre gaz d'au moins un type.

35. Procédé suivant la revendication 34, dans lequel le gaz d'au moins un type comprend l'hydrogène et le mélange gazeux comprend l'hydrogène et l'azote.

36. Procédé suivant la revendication 34, dans lequel le gaz d'au moins un type comprend l'hydrogène et le mélange gazeux comprend l'hydrogène et le méthane.

37. Procédé suivant la revendication 34, dans lequel le gaz d'au moins un type comprend l'anhydride carbonique et le mélange gazeux comprend l'anhydride carbonique et le méthane.

38. Procédé suivant la revendication 34, dans lequel le gaz d'au moins un type comprend l'azote et le mélange gazeux comprend l'azote et le méthane.

39. Procédé suivant la revendication 34, dans lequel le gaz d'au moins un type comprend l'oxygène et le mélange gazeux comprend l'air.

40. Procédé suivant la revendication 34, dans lequel le copolymère est constitué de motifs de monomères méthacrylate de méthyle et méthacrylate d'éthyle.

41. Procédé suivant la revendication 34, dans lequel le copolymère est constitué de motifs de monomères méthacrylate de méthyle et méthacrylate de n-butyle.

42. Procédé suivant la revendication 34, dans lequel le copolymère est constitué de motifs de monomères méthacrylate de méthyle et méthacrylate d'isobutyle.

43. Procédé suivant la revendication 34, dans lequel le dérivé cellulosique est choisi dans le groupe consistant en acétate de cellulose, acétobutyrate de cellulose, propionate de cellulose, butyrate de cellulose, acétopropionate de cellulose et leurs mélanges.

44. Procédé suivant la revendication 34, dans lequel le dérivé cellulosique est l'acétate de cellulose.

45. Procédé suivant la revendication 44, dans lequel l'acétate de cellulose possède un degré d'acétylation supérieur à 2,0.

46. Procédé suivant la revendication 34, dans lequel la couche de support comprend une matière polymérique.

47. Procédé suivant la revendication 46, dans lequel la couche de support comprend au moins une matière polymérique choisie dans le groupe consistant en une polysulfone, des polyoléfines, un polymère de sulfure de phénylène, une polyéthercétone, des polyamides et des polyimides.

48. Procédé suivant la revendication 46, dans lequel la couche de support est constituée d'une polysulfone.

49. Procédé suivant la revendication 46, dans lequel la couche de support est constituée d'une matière polymérique ayant subi un recuit.

50. Procédé suivant la revendication 34, dans lequel le dérivé cellulosique de la couche de séparation comprend de l'acétate de cellulose et la couche de support comprend une polysulfone.

51. Procédé suivant l'une quelconque des revendications 34 à 50, dans lequel la membrane composite est sous forme de fibres creuses.
